# EUROPEAN PATENT SPECIFICATION

(11) **EP 1 594 256 B1**
(45) Date of publication and mention of the grant of the patent: **19.03.2008**
(21) Application number: 03815515.6
(22) Date of filing: 13.08.2003
(51) Int. Cl.: H04L 12/28

(54) **Method and system for receiving and transmitting different data frames on digital transmission network**
Verfahren und System zum empfangen und senden verschiedener Datenrahmen in einem digitalen Übertragungsnetz
Prodédé et système de réception et d'émission de différentes trames de données sur une réseau d'émission numérique

(30) Priority: 28.01.2003 CN 03103094
(43) Date of publication of application: 09.11.2005
(73) Proprietor: Huawei Technologies Co., Ltd., Guangdong, Shenzhen 518057 (CN)
(72) Inventor: HE, Zhiqun, Int. Prop. Dept., Huawei Serv. Ctr., Shenzhen, Guangdong 518057 (CN); WANG, Yuxiang, Int. Prop. Dept., Huawei Serv. Ctr, Shenzhen, Guangdong 518057 (CN)
(74) Representative: Collin, Jérôme
(86) International application number: PCT/CN2003/000675
(87) International publication number: WO 2004/068789

(56) References cited:
- CN-A- 1 299 546
- US-A- 5 541 853
- US-A- 6 122 281

## Description

### Field of the Invention

The present invention relates to a system and method for data frames access and transport, in particular to a system and method for different data frames access and transport over a digital transport network.

### Background of the Invention

Because Ethernet technology is featured with low price and high expansibility, etc., it has evolved from a mainstream LAN technology to a primary data service access technology and is widely used in Metropolitan Area Network (MAN) by more and more telecom operators, see eg US 6 122 281. Providing Ethernet data services has becoming a trend for telecom operators. Ethernet data services can be classified into two types: Ethernet private line services and Virtual Local Area Network (VLAN) services.

For convenience, the phrases and abbreviations in the following description have the following meanings: MPLS - Multi-protocol Label Switching; GFP - Generic Framing Procedure; VLAN - virtual Local Area Network; VMAN - virtual Metropolitan Area Network; RPR - Resilient Packet Ring.

Currently, most of the telecom operators' data transmission networks are SDH/SONET networks. Therefore, it is a highlight for telecom operators and telecom equipment manufacturers to access and transfer Ethernet data frames effectively in an SDH/SONET network to meet the increasing demand for Ethernet data services. At present, several telecom equipment manufacturers have provided the devices to access and transfer Ethernet data frames in an SDH/SONET network, and those devices may be classified into 3 types according to the implementation approach of functionality:
(1)Data mapping and de-mapping scheme;
(2)Bridge scheme;
(3)RPR scheme.

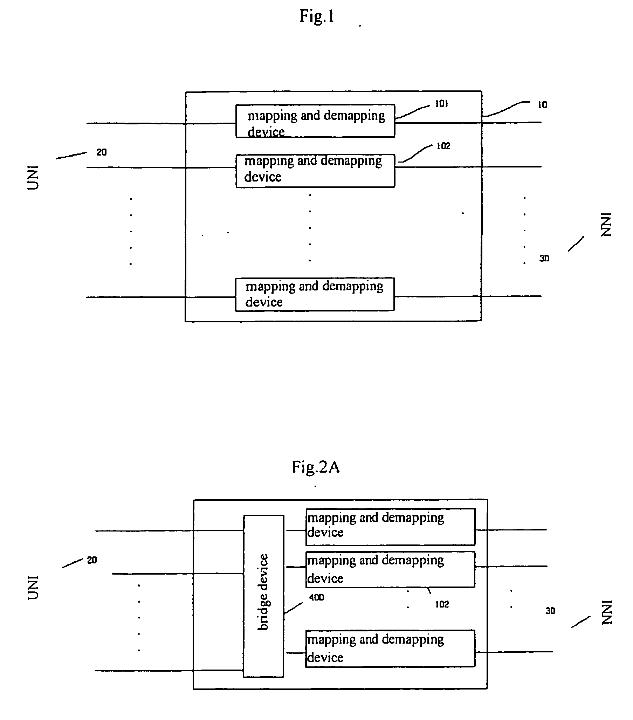

Fig.1 shows a block diagram of device according to the data mapping and de-mapping scheme in the first prior art. The device comprises one or more User-Network Interfaces (UNI) 20 (standard Ethernet interfaces), one or more Network-Network Interfaces (NNI) 30 (synchronous digital transmission channels), one or more mapping and de-mapping devices 101, 102, ..., each of which corresponds to a unique UNI and a unique NNI. Wherein, the data frames entering the device via UNI 20 and data frames output from the device comply with Ethernet data standard; data frames entering the device via NNI 30 and data frame output from the device comply with synchronous digital transport network standard.

Wherein the mapping and de-mapping device 10 maps Ethernet data frames entering the device via UNI 20 to become synchronous digital data frames, and outputs the mapped data frames via NNI 30; the mapping and de-mapping device 10 de-maps the synchronous digital data entering the device via NNI to Ethernet data frames, and outputs the data frames via the UNI. However, the functionality of the device is simple, thus it can only provide Ethernet private line services.

Fig.2A shows a block diagram of the device utilizing bridge scheme in the second prior art. The device comprises one or more UNIs 20 (standard Ethernet interfaces), each of which corresponds to a unique bridge port. The device further comprises one or more NNIs 30 (synchronous digital transmission channels) . The device further comprises a bridge device 400 (described in detail in IEEE802.1D and IEEE802.1Q), wherein the bridge device 400 comprises a plurality of bridge ports, each of which corresponds to a unique UNI or a unique mapping and de-mapping device. Each mapping and de-mapping device corresponds to a unique bridge port and a unique NNI. Wherein, the data frames entering the device via UNI 20 and the data frames output from the device comply with Ethernet data standard; data frames entering the device from NNI 30 and data frame output from the device comply with the standard of synchronous digital transport network.

Data frames entering the device via UNI 20 enter the bridge device 400 via the bridge port corresponding to the UNI; the bridge device 400 calculates the bridge output port according to the address information in the data frame and sends the data frames to the corresponding mapping and de-mapping device 102 (the mapping and de-mapping device maps the data frames and then outputs them to the NNI) via the output port, and vice versa.

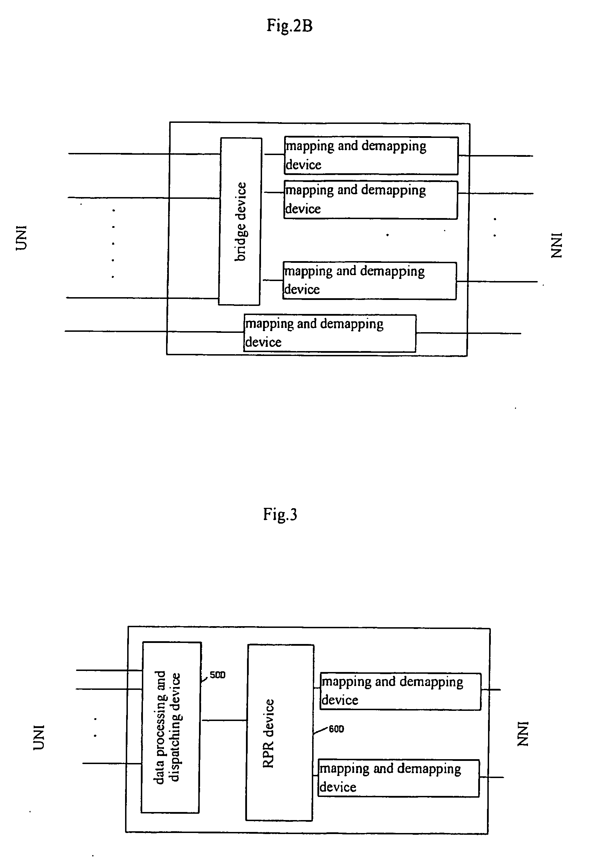

In the bridge scheme, usually the operator is allowed to map partial or all UNIs to mapping and de-mapping devices in a one to one way through configuration. In this case, the device employs both of above technical schemes, so it is called an enhanced bridge scheme. The functional model of an enhanced bridge device is shown in Fig.2B.

The disadvantage of the second prior art is:
(1) It is unable to provide integral VLAN service. If a plurality of users are attached to the device via UNIs and there are conflicts among address spaces of Ethernet data frames of those users, the device is unable to isolate the conflicts effectively, thus it is unable to provide services correctly to those users.
(2) A common bridge (non-enhanced bridge) is unable to provide Ethernet private line service.
(3) A UNI can only support one service type (Ethernet private line service or VLAN service), which limits the access capability of the device. In some cases, though the processing capacity of the device is still sufficient enough, new devices have to be added to improve access capacity because the UNIs have been used up.
(4) A NNI can only support one service type (Ethernet private line service or VLAN service), which leads to low convergence capability of the device. In some cases, in a star topology network, though the processing capacity of the device is still sufficient enough, new devices have to be added to improve convergence capacity because the NNIs have been used up. For operators, it means not only new investment but also bandwidth waste.

Fig. 3 shows a block diagram of the device utilizing RPR scheme in the third prior art. The device comprises one or more UNIs (standard Ethernet UNIs), two NNIs (synchronous digital transmission channels), and a RPR device 600 (described in IEEE802.17), two mapping and de-mapping devices, and a data processing device 500 which may be a data converging/diverging device or a bridge device).

Wherein the data frames entering the device via the UNI 20 are processed as follows:
Step 1: the data processing device 500 processes the data frames (the data frames are converged if the data processing device is a data converging/diverging device; the data frames are switched if the data processing device is a bridge device);
Step 2: the data processing device 500 transfers the processed data frames to the RPR device 600;
Step 3: the RPR device 600 sends the data frames to the corresponding mapping and de-mapping device according to the address information in the data frames;
Step 4: the mapping and de-mapping device maps performs mapping operation for the data frames and sends them to outside of the device via the corresponding NNI.

The data frames entering the device via the NNI are processed as follows:
Step 1: the mapping and de-mapping device performs de-mapping operation for the data frames and transfers the de-mapped data frames to the RPR device 600;
Step 2: the RPR device 600 processes the data frames and then sends them to the data processing device;
Step 3: the data processing device 500 processes the data frames (the data frames are diverged if the data processing device is a data converging/diverging device; the data frames are switched if the data processing device is a bridge device);
Step 4: the data processing device 500 finds corresponding UNI according to the address information in the data frames and then outputs the data frames via the UNI.

The disadvantages of said scheme are:
(1) It is unable to provide Ethernet private line service and VLAN service at the same time. If the data processing device is a bridge device, it doesn't support Ethernet private line service; if the data processing device is a data converging/diverging device, it doesn't support VLAN service.
(2) It can only be used in a ring topology network.

### Summary of the Invention

An object of the present invention is to provide a virtual interface device over a SDH/SONET network and the method for data frames access and transport over a SDH/SONET network thereof, in order to improve the access ability. According to the present invention, one UNI or NNI can be expanded to a plurality of virtual interfaces, each of which corresponds to different users and different services to overcome the disadvantages of the prior art.

An embodiment of the present invention provides a system according to claim 1.

Another embodiment of the present invention provides a method according to claim 6.

The system and method according to the present invention have the following advantages:
(1) with the virtual interface device and the method of the present invention, data from the device interfaces is processed after being classified, different data classes will be processed differently;
   existing technical schemes and devices have to be implemented on a default presumption: data frames from a device interface belong to the same type, and different types of data frames enter the device via different device interfaces. Therefore, in the existing technical solution and system, data frames entering the device via the same device interface are processed through the same procedure, thus the corresponding relation between procedures and device interfaces is 1: n. As a result, if there are many data types sometimes, though the processing capacity of the device is still sufficient enough, some services can't be supported due to lack of free device interfaces.
   Whereas with the system and method of the present invention, data frames from a device interface may contain various types, and procedures for different types of data frames are different; the corresponding relation between procedures and device interfaces is m: n.
(2) According to the system and method of the present invention, both VLAN service and Ethernet data private service can be achieved at a device interface (a UNI or a NNI). And data frames of many users can be accessed and converged at a device interface, thus the accessing and converging abilities of the device are improved greatly.
(3) According to the system and method of the present invention, operators can adjust the procedure in the device flexibly according to the network topology, users' requirements and bandwidth resource etc, thus the processing ability and efficiency of bandwidth can be improved.

### Brief Description of the Drawings

Fig.1 is the block diagram of the data mapping and de-mapping scheme according to the first prior art;
Fig.2A is the block diagram of the bridge scheme according to the second prior art;
Fig.2B is the block diagram of the enhanced bridge scheme according to the second prior art;
Fig.3 is the block diagram of RPR scheme according to the third prior art;
Fig.4 is the schematic diagram of a preferred embodiment of the system for Ethernet data frames access and transport over an SDH/SONET network according to the present invention;
Fig.4 (F) is the data processing flowchart according to a preferred embodiment of the system for Ethernet data frames access and transport over an SDH/SONET network of the present invention;

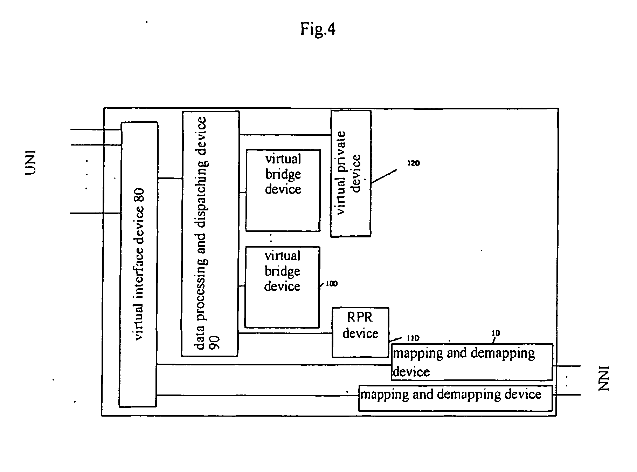

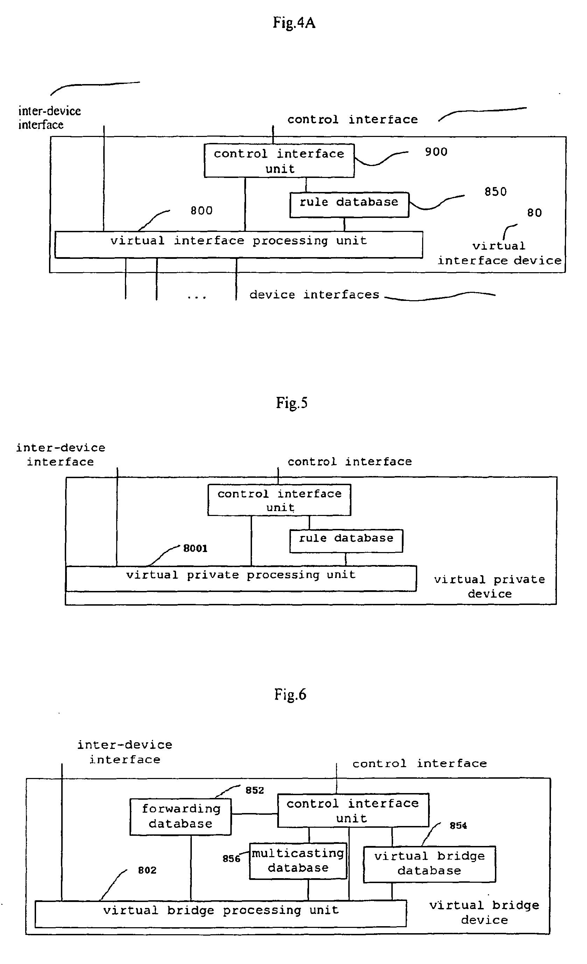

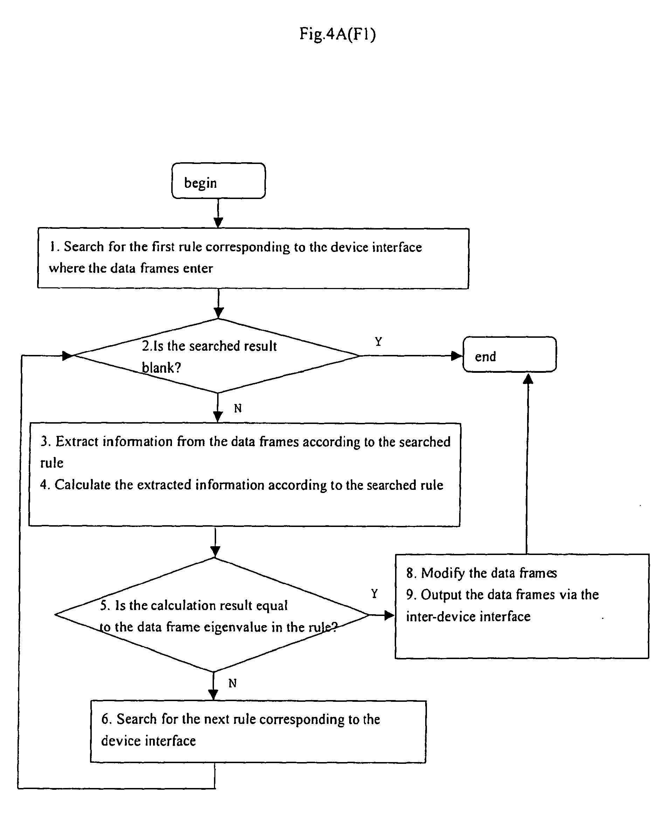

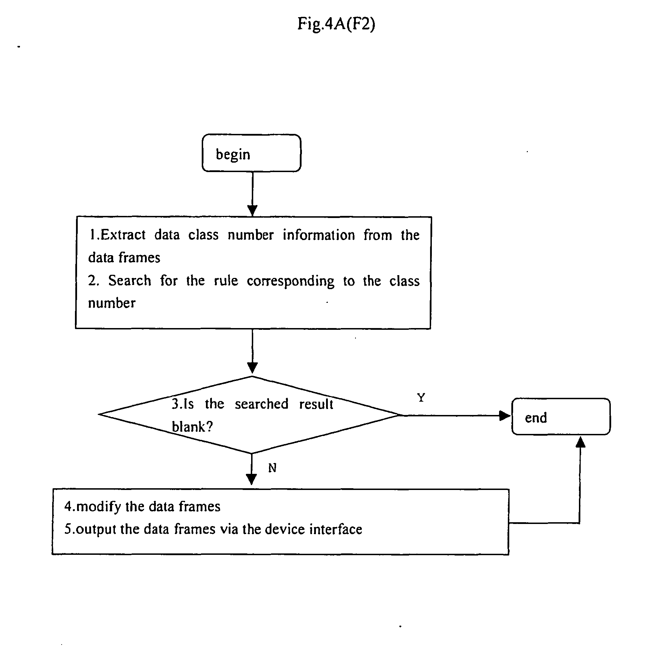

Fig.4A is the schematic block diagram of virtual interface device according to a preferred embodiment of the system for Ethernet data frames access and transport over a SDH/SONET network according to the present invention;
Fig. 4A (F1) is the flowchart of the virtual interface device processing the incoming data frames from the device interface according to a preferred embodiment of the system for Ethernet data frames access and transport over an SDH/SONET network of the present invention;
Fig.4A (F2) is the flowchart of the virtual interface device processing the incoming data frames from the inter-device interface according to a preferred embodiment of the system for Ethernet data frames access and transport over an SDH/SONET network of the present invention;

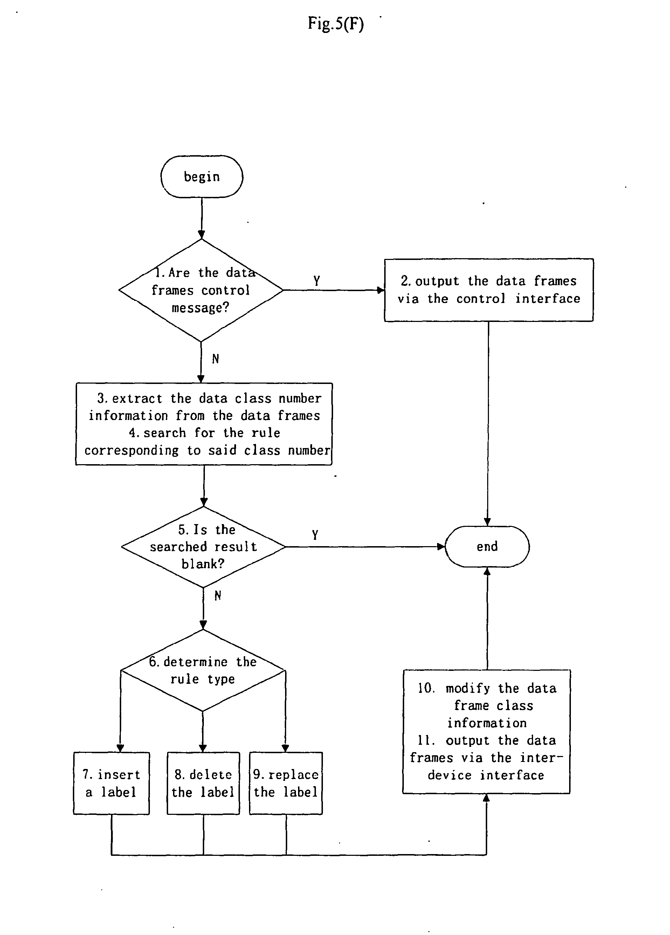

Fig.5 is the schematic block diagram of the virtual private device according to a preferred embodiment of the system for Ethernet data frames access and transport over an SDH/SONET network of the present invention;
Fig.5 (F) is the flowchart of the virtual private device processing the incoming data frames from the inter-device interface according to a preferred embodiment of the system for Ethernet data frames access and transport over an SDH/SONET network of the present invention;

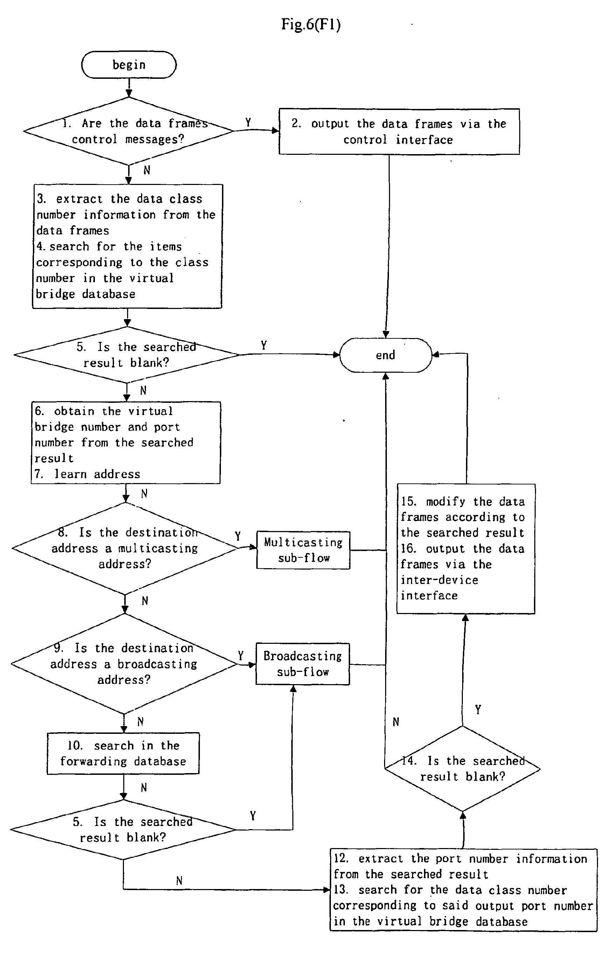

Fig.6 is the schematic block diagram of the virtual bridge device according to a preferred embodiment of the system for Ethernet data frames access and transport over an SDH/SONET network of the present invention;
Fig.6 (F1) is the flowchart of the virtual bridge device processing the incoming data frames from the inter-device interface according to a preferred embodiment of the system for Ethernet data frames access and transport over a SDH/SONET network of the present invention;

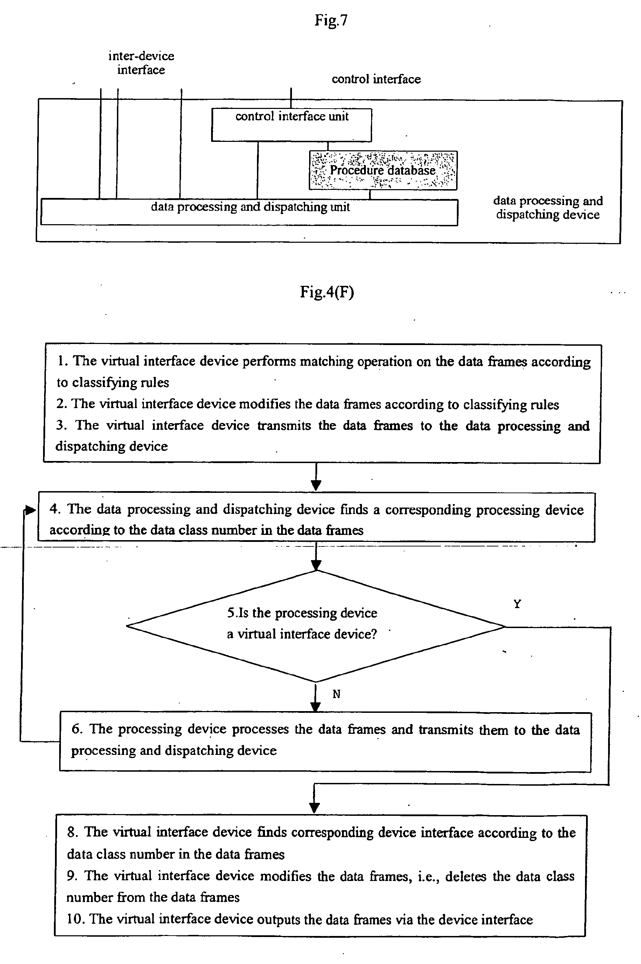

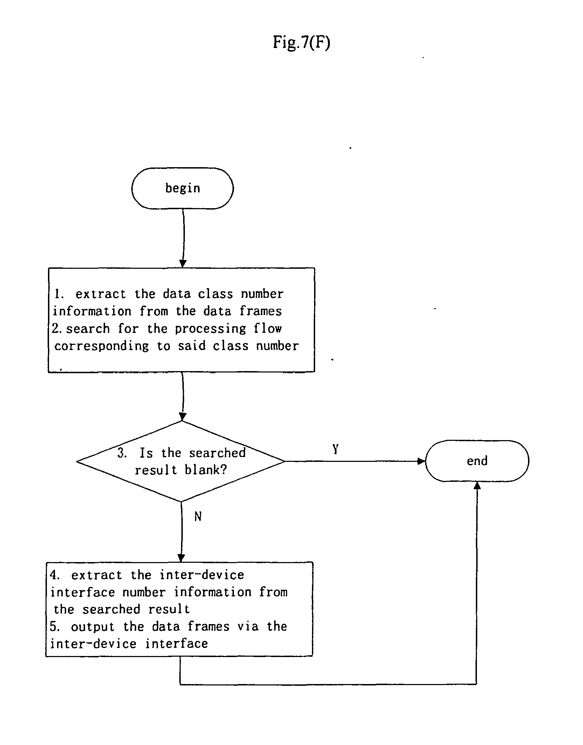

Fig.7 is the schematic block diagram of the data processing and dispatching device according to a preferred embodiment of the system for Ethernet data frames access and transport over an SDH/SONET network of the present invention;
Fig.7 (F) is the flowchart of the data processing and dispatching device processing the incoming data frames according to a preferred embodiment of the system for Ethernet data frames access and transport over an SDH/SONET network of the present invention;

### Detailed description of the Embodiments

### Application of the system:

The operator may employ the system shown in Fig. 4 to provide Ethernet services for users, which correspond to combinations of a plurality of procedures. The operator may define and choose required procedure combinations flexibly according to network topology, the users' service demands and bandwidth resource. The commonly used procedure combinations are as follows:

procedure combination 1:
(1) the virtual interface device classifies the data frames;
(2) the virtual interface device outputs the data frames to corresponding device interfaces.

Processing flow combination 2:
(1) the virtual interface device classifies the data frames;
(2) the virtual bridge device exchanges the data frames;
(3) the virtual interface device outputs the data frames to corresponding device interfaces.

Processing flow combination 3:
(1) the virtual interface device classifies the data frames;
(2) the virtual private device processes the data frames (relay, converge, or diverge);
(3) the virtual interface device outputs the data frames to corresponding device interfaces.

Processing flow combination 4:
(1) the virtual interface device classifies the data frames;
(2) the RPR device processes the data frames (terminates, relays, or starts data frame transportation);
(3) the virtual interface device outputs the data frames to corresponding device interfaces.

When implementing functions of the devices, the device manufacturers may partially or completely employ the system and method according to the present invention. For some devices with simple functions, part of components can be omitted and the procedure is relatively simple. The device manufacturers may even fix the processing through fixing connections among the devices to omit the data processing and dispatching device. For instance, for a device that provides only Ethernet private service, it may comprises only the following devices:
(1) one or more UNIs;
(2) one or more NNIs and mapping and de-mapping devices;
(3) a virtual interface device;
(4) a virtual private device.

Said device supports the following combinations of procedures:
(1) procedure combination 1;
(2) procedure combination 3.

With the system and method of the present invention, integral VLAN services can be provided for users. The system and method of the present invention overcome the restriction on Ethernet data frame address space at UNIs. When a plurality of Ethernet data frames is sent to such a device of the network, there is no restriction on address space of Ethernet data frames.

With the system and method of the invention, a device interface (UNI or NNI) can support both VLAN service and Ethernet data private service, and a plurality of Ethernet data frames from many users can be accessed and converged at a device interface, thus the accessing and converging capability of the device is enhanced greatly.

With the system and method of the present invention, the operator may maximize processing capacity of devices and utilization ratio of bandwidth resource through flexible adjustment to internal procedures according to network topology, the users' service demands, and bandwidth resource. 94] With the system and method of the present invention, individualized services can be quickly provided for users. The operator may provide new services for users through creating new flow combinations, without upgrading or purchasing devices.

According to the present invention, data frames entering the virtual interface device via device interfaces are processed after being classified; different data classes will be processed differently which are implemented by the virtual interface device.

The existing technical solutions and devices have to be implemented on a presumption: data frames from a device interface belong to the same class, and different classes of data frames must enter the device via different device interfaces. Therefore, in the existing technical solution and system, the incoming data frames via the same device interface are processed through the same procedure, thus the corresponding relation between procedures and device interfaces is 1: n. Therefore, if there are many data classes, though the processing capacity of the device is still sufficient enough, some services can't be supported due to lack of free device interfaces.

With the system and method of the present invention, however, data frames from a device interface may contain various classes, and procedures for different classes of data frames are different; the corresponding relation between procedures and device interfaces is m:n.

In addition, the present invention supports free combination of procedures; the data processing and dispatching device and the combination of its procedures is an important part of the present invention.

Existing technical solutions and devices have no data processing and dispatching device and support only several fixed procedures and thus lack of flexibility. In practice,the requirements of operators for functions of devices are always changing.

A system lacking of flexibility is unable to adapt to the changing environment. In the present invention, the operator can update the procedures of the device dynamically, and users can choose flow combinations provided by the device or create new flow combinations by himself/herself as required. There are 22 procedure combinations available.

In the existing technical solutions and devices, the amount of bridge devices is certain; so conflicts among data frame address spaces of different users can be avoided only through restricting the data frame address spaces of users. Whereas the virtual bridge devices in the present invention can add virtual bridges dynamically, and the address space of each virtual bridge is independent; different virtual bridges correspond to different users; therefore, the present invention has no restriction to data frame address spaces of users.

In addition, data frames for different users can be isolated, transported and shared by adding a label before sending, changing the label during transport and removing the label at destination address, thus the virtual private device of the present invention is achieved.

To make the system and method of the present invention be better understood, the basic function of the devices is described first. Usually, any device has the following 3 functions:
(1) input function, i.e., receive information from external of the device;
(2) processing function, i.e., process said information received from external of the device;
(3) output function, i.e., output the processed information.

For a device accessing and transporting Ethernet data frames over an SDH/SONET network:
(1) input function: receive information from external of the device via the UNIs and the NNIs;
(2) output function: output the processed information via the UNIs and the NNIs;
(3) processing function: for a device accessing and transporting Ethernet data frames over an SDH/SONET network, different service abilities and service efficiencies depend on different solutions.

In addition, the phrase "standard Ethernet interface" used in the present invention means the following:

IEEE802.3 defines the LAN interface in detail; in the present invention, an interface under IEEE802.3 is regarded as a standard Ethernet interface.

The present invention will be described hereunder with reference to the drawings. For concision, components and units described in prior art will not be described in detail hereunder. And components and units described above will not be described in detail hereunder.

Fig.4 shows a system for different data frames access and transport over a SDH/SONET network. The system comprises a plurality of UNIs designed to couple with the user's network; a plurality of NNIs designed to couple with said digital transport network to transport data frames; a plurality of mapping and de-mapping devices 10; a virtual interface device 80 coupled to said UNIs and coupled to said NNIs via said mapping and de-mapping devices 10; a data processing and dispatching device 90 coupled to said virtual interface device 80; a virtual private device 120 and a plurality of virtual bridge devices 100 and an PRP device 110 coupled to said data processing and dispatching device. Wherein said mapping and de-mapping devices 10, said virtual interface device 80, and said data processing and dispatching device 90 constitute the data converting device of the present invention. Although a plurality of virtual private device 120, a virtual bridge device 100 and a PRP device 110 are described in the present invention, it should be noted that a combination of any one or two of them can implement the present invention. The input to said system for different data frames access and transport over a digital transport network comprises: (1) data frames entering the virtual interface device via the UNIs; (2) data frames entering the mapping and de-mapping devices via the NNIs. The data frames output from said system for different data frames access and transport over a digital transport network comprises: (1) data frames output to external of the virtual interface device via the UNIs; (2) data frames output to external of the mapping and de-mapping device via the NNIs.

Fig.4 (F) shows the processing steps for data frames entering the virtual interface device via the UNIs according to the system for different data frames access and transport over an SDH/SONET network.
First, in step 1, the virtual interface device performs matching on the data frames according to classifying rules;
in step 2, the virtual interface device modifies the data frames according to classified result, i.e., inserts a data frame class number in the data frames;
in step 3, the virtual interface device transfers the modified data frames to the data processing and dispatching device;
in step 4, the data processing and dispatching device finds a corresponding processing device according to the data frame class number in the data frames;
in step 5, the data processing and dispatching device transfers the data frames to the corresponding processing device; if it is the virtual bridge device to exchange the data frames, the data frames are transferred to the virtual bridge device; if it is the corresponding processing device is the virtual interface device, goes to step 8;
in step 6, said corresponding processing device processes the data frames, and modifies the data frame class number at the end of the processing, and then transfers the modified data frames to the data processing and dispatching device;
in step 7, the system goes to step 4;
in step 8, the virtual interface device finds a corresponding device interface according to the data frame class number in the data frames;
in step 9, the virtual interface device modifies the data frames, i.e., deletes the data frame class number from the data frames;
in step 10, the virtual interface device outputs the modified data frames via a device interface (if the device interface corresponds to a NNI, mapping operation should be performed through the mapping and de-mapping devices before output).

The processing steps for data frames entering the virtual interface device via the NNIs according to the system for different data frames access and transport over an SDH/SONET network are as follows:
in step 1, the mapping and de-mapping devices perform a de-mapping operation on the data frames;
in step 2, the rest processing steps are identical to those for data frames entering the virtual interface device via the UNIs.

When implementing functions of the system, the device manufacturers may partially or completely employ above method. For devices with simple functions, the processing is relatively simple. The device manufacturers may even treat the processing as firmware through fixing connections among the devices so as to omit the data processing and dispatching and device.

Fig.4A shows the schematic block diagram of the virtual interface device according to a preferred embodiment of the system for Ethernet data frames access and transport over a SDH/SONET network of the present invention. In the system, a virtual interface device 80 is used to enhance access ability. Via the virtual interface device 80, a device interface (UNI 20 or NNI 30) may be expanded to a plurality of virtual interfaces, each of which corresponds to different users and different services respectively. For data frames entering the virtual interface device via the device interfaces (UNIs 20 and NNIs 30), a virtual interface processing unit 800 of the virtual interface device will classify them according to different services required by different users and choose a corresponding processing according to the classification. A different processing corresponds to different rules stored in the rule database 850. A control interface unit controls the virtual interface processing unit 800 to perform classification according to the instructions from a control interface, and the virtual interface processing unit searches for a corresponding rule stored in the rule database 850 to process the data frames. Data frames output from the virtual interface device are transported to a corresponding device interface to output after processing according to the classification in the virtual interface device. Because the virtual interface device stores N rules, the corresponding relation between the device interface and the rules is 1:N. The rules in the virtual interface device may be created or deleted dynamically. Therefore, it is easy to modify the rules to enhance the adaptability of the system according to the users' requirements and the updating of the system. The virtual interface device also comprises a software loader (not shown) to load different software.

As the processing center, the virtual interface processing unit 800 is responsible for processing data frames and serves as a processing center; the processing steps and processing logics in the virtual interface processing unit are firmware and can' t be changed during operation of the virtual interface device. The rule database is a control center and is responsible for providing relevant processing and control parameters when the virtual interface processing unit processes the data frames. Different parameters lead to different processing actions. During operation of the virtual interface device, the rules in the rule database may be updated. The control interface unit is provided with an external control interface of the virtual interface device. Via the control interface, the control system of the virtual interface device may monitor the working status of the virtual interface processing unit and performs adding, deleting, modifying, and searching operations on rules in the rule database. The rule database may store a plurality of rules, each of which contains five parts: device interface number, data frame class number, data frame address offset, data frame eigenvalue, and data frame comparison mask.

Wherein the virtual interface device is connected with the UNIs or NNIs via device interfaces. The corresponding relation between the UNIs (or NNIs) and the device interfaces is 1:1. The virtual interface device is connected with the data processing and dispatching device via the inter-device interface. The virtual interface device is connected with the control system of the virtual interface device via the control interface.

Fig.4A (F1) shows the steps of the virtual interface processing unit processing data frames entering the virtual interface device via a device interface:
step 1: searching for a first rule in the rule database corresponding to the device interface with the index of the number of device interface where the data frames enter;
step 2: determining the searched result; if it is blank, discarding said data frames and going to step 10;
step 3: reading information at a data frame address offset of the data frame according to the data frame address offset in the rule;
step 4: performing AND operation in bit between said read information and data frame comparison mask in the rule;
step 5: comparing the calculated result in step 4 with the data frame eigenvalue in the rule; if they are equal, going to step 8;
step 6: searching for a next rule corresponding to said device interface in the rule database;
Step 7: going to step 2;
step 8: modifying the data frames, i.e., inserting data frame class number information in the rule in the header of the data frames;
step 9: sending the data frames to the data frame processing and dispatching device via the inter-device interface;
step 10: ending.

Fig.4A (F2) shows the steps of the virtual interface processing unit processing data frames entering the virtual interface device via the inter-device interface. For data frames entering the virtual interface device via the inter-device interface, the processing steps performed by the virtual interface processing unit are as follows:
step 1: extracting a data frame class number from header of the data frames;
step 2: searching in the rule database with the index of the data frame class number;
step 3: determining the searched result; if it is blank, discarding said data frames and going to step 6;
step 4: modifying the data frames, i.e., deleting the data frame class number from header of the data frames;
step 5: sending the data frames to a corresponding device interfaces according to the device interface number in the rule;
step 6: ending.

Fig.5 is the schematic block diagram of the virtual private device according to a preferred embodiment of the system for Ethernet data frames access and transport over an SDH/SONET network of the present invention. In the virtual private device, a virtual private processing unit 8001 is coupled to an inter-device interface to process the data frames through the inter-device interface. The virtual private processing unit 8001 is also coupled to a rule database and a control interface unit. The control interface unit exchanges data with external via the control interface.

The present invention enhances converging ability of the system by using the virtual private device. The virtual private device stores a plurality of converging rules, a plurality of diverging rules, and a plurality of relay rules (the relay rules are optional and unnecessary in some simple virtual private device). The corresponding relation between data classes and the rules is 1:1. The rules in the virtual private device can be created and deleted dynamically. Data frames of different users can be isolated, transported and shared over the same physical channel through virtual private device adding a label before sending, changing the label during transport and removing the label at the destination address. A virtual private device comprises a virtual private processing unit and a rule database.

The virtual private processing unit has two major functions:
(a) detecting control messages and transferring the control messages to the control system of the virtual private device via the control interface unit.
(b) performing convergence, divergence, or relay operation on data frames except for the control messages.

The virtual private processing unit is a processing center of the virtual private device; the following items are fixed in the virtual private processing unit:
(a) format of control messages;
(b) processing steps and logics for data frames;
(c) format of rules in the rule database;

The rule database is responsible for the processing action of the virtual private processing unit and serves as a control center. The rules in the rule database may be updated dynamically. The rule database may store a plurality of rules, each of which comprises the following four parts: input data frame class number, rule type (convergence/divergence/relay), label number, and output data frame class number.

Wherein said virtual private device is connected with the said data processing and dispatching device via the inter-device interface; said virtual private device is connected with the control system of the system of the present invention via the control interface.

There is a plurality of technical solutions to implement the virtual private device. However, the data frames processing steps and logics in the virtual private processing unit are identical under different technical solutions. The main differences between these technical solutions are:
(a) format of rules in the rule database, for example, length and position of labels in each rule;
(b) format of control messages in the virtual private processing unit.

In view of expandability and compatibility, it is recommended to implement the virtual private device with MPLS, GFP, VMAN, or Nested VLAN technology in the present invention. The virtual private device manufacturers may also employ self-defined label formats (or self-defined data frame encapsulations) to implement said virtual private device. The virtual private device may support a plurality of different technologies at a time.

Fig.5 (F) shows the flowchart of the virtual private processing; for data frames entering the virtual private device via the inter-device interface, the processing steps of the virtual private processing unit are as follows:
step 1: determining whether the data frames are control messages; if so, going to step 3;
step 2: transporting the data frames to an external control system via the control interface unit, and then going to step 12;
step 3: extracting the input data frame class number from the header of the data frames;
step 4: searching in the rule database with the index of the input data frame class number;
step 5: determining the searched result; if it is blank, discarding said data frames and going to step 12;
step 6: determining the rule type; if it is convergence, going to step if it is divergence, going to step 8; if it is relay, going to step 9;
step 7: modifying the data frames, i.e., inserting a label number defined in the rule at a special position in the data frames, and then going to step 10;
step 8: modifying the data frames, i.e., removing the label number at the special position in the data frames, and then going to step 10;
step 9: modifying the data frames, i.e., replacing the label number at the special position in the data frames with a label number defined in the rule;
step 10: modifying the data frames, i.e., replacing the data frame class number at the header of the data frames with the output data frame class number defined in the rule;
step 11: sending the data frames to the data frame processing and dispatching device via the inter-device interface;
step 12: ending.

Fig. 7 is the schematic block diagram of the data processing and dispatching device according to the system for Ethernet data frames access and transport over an SDH/SONET network of the present invention. The data processing and dispatching device is coupled to other devices via a plurality of inter-device interfaces to process the data passing through the inter-device interfaces. In the data processing and dispatching device a data processing and dispatching unit coupled to a procedure database and a control interface unit. The control interface unit exchanges data with external via a control interface.

The present invention employs the data processing and dispatching device to implement individualized services to improve serviceability of the device. The data processing and dispatching device stores a plurality of procedures in it. The corresponding relation between the procedures and the data frame classes is 1:1. The data processing and dispatching device finds a corresponding procedure according to a data frame class, and informs other corresponding devices to process the data frames according to the procedure. The procedure in the data frame processing and dispatching device may be created, modified, or deleted dynamically. During operation of the data processing and dispatching device, the operator may quickly provide individualized services to maximize the efficacy of the data processing and dispatching device through dynamically adding, modifying, and deleting the procedures in the data processing and dispatching device.

The data processing and dispatching unit is the processing center of the data processing and dispatching device, in which the processing steps are fixed. The data processing and dispatching device comprises the plurality of inter-device interfaces, each of which corresponds to a unique external device. The corresponding relation between the inter-device interfaces and the external devices are fixed.

The procedure database is the control center of the data processing and dispatching device, and may be updated dynamically. Each procedure in the procedure database contains the following information:
(a) data frame class number;
(b) inter-device interface number

The data processing and dispatching device is connected with other devices via the inter-device interfaces, each of the inter-device interfaces corresponds to a virtual bridge device, a virtual private device, an RPR device, or a virtual interface device. The data processing and dispatching device is connected with the control system of the system of the present invention via the control interface.

Fig.6 is the schematic block diagram of the virtual bridge device according to a preferred embodiment of the system for Ethernet data frames access and transport over a SDH/SONET network of the present invention. The present invention overcomes the problem of limited Ethernet data frame address space with virtual bridge devices. A virtual bridge device may provide a plurality of virtual bridges. Each virtual bridge possesses all functions and properties of a bridge device. However, it differs from the bridge device in that the virtual bridge may be created and deleted dynamically. During operation of the virtual bridge device, the operator may create or delete a plurality of virtual bridges dynamically because each virtual bridge has an independent address space, the operator may provide VLAN services to users with different virtual bridges if that conflicts exists among address spaces.

The operator may configure a virtual bridge just like a physical bridge. The virtual bridge further expands the features of a bridge to support VMAN-based switching operation. A virtual bridge device comprises a virtual bridge processing unit 802, a multicasting database 856, a control interface unit, a forwarding database 852, and a virtual bridge database 854.

The virtual bridge processing unit has 3 major functions:
(a) detecting control messages, and transferring the control messages to the control system of the virtual bridge device via the control interface unit;
(b) learning addresses, and storing the knowledge acquired into the forwarding database;
(c) performing switching on data frames except for control messages and modifying a data frame class in the data frames.

The virtual bridge processing unit is the processing center of the virtual bridge device, and there are five items embedded in it:
(a) format of control messages;
(b) processing steps and logics for data frames;
(c) format of forwarding items in the forwarding database;
(d) format of multicasting items in the multicasting database;
(e) format of items in the virtual bridge database.

The virtual bridge database, the multicasting database, and the forwarding database are responsible for the processing action of the virtual bridge processing unit, and the items in the databases may be updated during operation of the virtual bridge device. The data formats of items in the multicasting database and the forwarding database are identical, and each item contains the following fields:
(a) virtual bridge number;
(b) input port of virtual bridge;
(c) input destination address;
(d) input VLAN number;
(e) input VMAN number;
(f) output port of virtual bridge.

In the multicasting database, the database code is the combination of all fields; in the forwarding database, the database code is the combination of all fields except for the output port of virtual bridge.

Each item in the virtual bridge database contains the following fields:
(a) input data frame class number;
(b) virtual bridge number;
(c) port number;
(d) output class data frame class number.

Via the control interface, an external control system of the virtual bridge device may implement the following functions:
(a) performing adding, deleting, modifying, and searching operations on items in the above databases;
(b) monitoring the working status of the virtual bridge processing unit.

The virtual bridge device is connected with the data processing and dispatching device via the inter-device interface. The virtual bridge device is connected with the control system of the system of the present invention via the control interface.

Fig.6 (F1) is the flowchart of the virtual bridge device processing the incoming data frames from the inter-device interface according to a preferred embodiment of the system for Ethernet data frames access and transport over an SDH/SONET network of the present invention. For data frames entering the virtual bridge device via the inter-device interface, the virtual bridge processing unit performs the following processing steps:
step 1: determining whether the data frames are control messages; if not, going to step 3;
step 2: transporting the data frames to an external control system via the control interface unit, and then going to step 17;
step 3: extracting an input data frame class number, destination address, source address, VLAN number, and VMAN number (optional) from a fixed position in the data frames;
step 4: searching in the virtual bridge database with the index of the data frame class number extracted;
step 5: determining the searched result; if it is blank, discarding said data frames and going to step 17;
step 6: exacting the virtual bridge number and port number from the searched result;
step 7: learning the source address, and then updating the forwarding database according to the learning result;
step 8: determining whether the destination address is a multicasting address; if so, executing a multicasting sub-flow first, and then going to step 17;
step 9: determining whether the destination address is a broadcasting address, if so, executing a broadcasting sub-flow, and then going to step 17;
step 10: searching in the forwarding database with the index of virtual bridge number, input port number, and destination address, VLAN number, and VMAN number (optional);
step 11: determining the searched result; if it is blank, executing a broadcasting sub-flow, and then going to step 17;
step 12: extracting an output port number from the searched result;
step 13: searching in the virtual bridge database with the index of the virtual bridge number and the output port number;
step 14: determining the searched result; if it is blank, discarding said data frames and going to step 17;
step 15: extracting an output data frame class number from the searched result and modifying the data frames, i.e., replacing the data frame class number in the data frames with the output data frame class number;
step 16: outputting the modified data frames via the inter-device interface;
step 17: ending.

Fig.7 (F) is the flowchart of the data processing and dispatching device processing the incoming data frames according to a preferred embodiment of the system for Ethernet data frames access and transport over a synchronous digital transport network of the present invention. The data processing and dispatching unit processes the incoming data frames as follows:
step 1: extracting a data frame class number from the data frames;
step 2: searching in the procedure database with the index of the extracted data frame class number;
step 3: determining the searched result; if it is blank, discarding said data frames and going to step 6;
step 4: extracting inter-device interface number from the searched result;
step 5: outputting the data frames via an inter-device interface corresponding to the inter-device interface number to external of the data processing and dispatching device;
step 6: ending.

Though the present invention is described with reference to embodiments, those skilled in the art should understand there may be lots of changes and modifications without departing from the scope of the present invention. So any change and modification and its equivalence should be in the protective scope of the present invention.

## Claims

1. A system for accessing and transporting data frames with different frame formats, comprising:
at least one User-Network Interface hereinafter referred to as UNI, which is coupled with a user network; and/or
at least one Network-Network Interface hereinafter referred to as NNI, which is coupled with a digital transport network; and
a data converting device, which is coupled with said at least one UNI and/or at least one said NNI to convert the frame formats of the data frames transported between the UNIs,and/or the frame formats of the data frames transported between the NNIs, and/or the frame formats of the data frames transported between the NNI and the UNI;
wherein said data converting device is **characterized by** comprising a virtual interface device (80),
said virtual interface device comprises: at least two device interfaces for inputting or outputting data frames; a virtual interface processing unit (800), which couples to said device interfaces to process said data frames and exchange data frames between the virtual interface processing unit (800) and the device interfaces; a rule database (850), which couples to said virtual interface processing unit (800) and stores rules corresponding to the different data frame formats, to enable said virtual interface processing unit (800) to classify the data frames and determine procedures for different classes of the data frames according to rules; a control interface unit (900), which couples to and control said rule database (850) and said virtual interface processing unit (800) ; and an inter-device interface, which couples to said virtual interface processing unit (800) to couple with external devices to exchange data frames.

2. The system according to claim 1, wherein the corresponding relation between said device interfaces and said rules is 1: N, wherein N is a natural number more than or equal to 1, and each device interface is configured as a device interface meeting the requirement of the data interface corresponding to any of the rules.

3. The system according to claim 1 or 2, wherein said control interface unit (900) provides a control interface, through which to monitor the operation of the virtual interface processing unit (800), and to perform adding, deleting, modifying and searching operations on rules in said rule databases (850).

4. The system according to claim 3, wherein a rule comprises device interface number, data frame class number, data frame address offset, data frame eigenvalue, and data frame comparison mask, which provide processing and control parameters when said virtual interface processing unit (800) processes said data frames.

5. The system according to claim 1, wherein
said device interfaces connect with said at least one UNI or said at least one NNI,
the virtual interface device (80) connects with said data processing and dispatching device (90) via said inter-device interface (860), and
the corresponding relation between said device interfaces and said at least one UNI or said at least one NNI is 1:1.

6. A method for data frames access and transport over a digital transport network using the system of claim 1, said system comprising a data converting device which is **characterized by** comprising a virtual interface device (80), said method comprises the following steps:
searching for a first rule corresponding to a device interface;
determining whether said first rule is found; if said first rule is not found, ending the process;
if said first rule is found, obtaining a data frame class number;
determining whether said data frame class number complies with a second rule;
if said data frame class number does not comply with a second rule, searching for a next rule corresponding to the device interface, and returning to determine whether said first rule is found;
if said data frame class number complies with a second rule, modifying said data frames, sending the data frames via an inter-device interface, and then ending the process.

7. The method according to claim 6, wherein said virtual interface device (80) processes the data frames entering via the inter-device interface according to the following steps:
extracting a data frame class number, according to which searching for a rule corresponding to the data frame type number in the rule database (850);
if the rule is not found, discarding said data frames, and ending the process;
if the rule is found, modifying said data frames, and sending the data frames to one of the device interfaces according to the rule.

8. The method according to claim 6, wherein the step of searching for a first rule corresponding to a device interface comprises: performing searching in a rule database (850) with the index of a device interface number of the device interface receiving the data frames

9. The method according to claim 6, wherein said step of the if said first rule is not found, ending the process further comprises a step of outputting a report and discarding said data frames.

10. The method according to claim 6, wherein the step of obtaining a data frame class number comprises: reading information at the address offset for the data frames according to the data frame address offset in the first rule, and performing AND operation in bit between said read information and the data frame comparison mask in the first rule.

11. The method according to claim 10, wherein the step of determining whether the data frame class number complies with the second rule comprises a step of comparing the data frame class number with a data frame eigenvalue in the first rule.

12. The method according to claim 10, wherein the step of modifying the data frames comprises a step of inserting the data class number into a header of the data frames.

13. The method according to claim 7, wherein the step of extracting the data frame class number comprises a step of extracting the data frame class number at a header of the data frames.

14. The method according to claim 13, wherein the step of searching for a rule corresponding to the data frame type number in the rule database (850) comprises a step of searching in the rule database (850) with the index of the data frame class number.

15. The method according to claim 14, wherein the steps of modifying said data frames and sending the data frames to one of the device interfaces according to the rule comprise: deleting the data class number at the header of the data frames, and sending the data frames to one of the device interfaces according to the device interface number in the rule.

## Patentansprüche

1. System für den Zugriff und die Übertragung von Datenrahmen mit unterschiedlichen Rahmenformaten, umfassend:
mindestens eine Benutzer-Netzwerk-Schnittstelle, im Folgenden als UNI bezeichnet, die mit einem Benutzer-Netzwerk gekoppelt ist; und/oder
mindestens eine Netzwerk-Netzwerk-Schnittstelle, im Folgenden als NNI bezeichnet, die mit einem digitalen Übertragungsnetz gekoppelt ist; und
eine Daten-Umwandlungs-Vorrichtung, die mit der mindestens einen UNI und/oder der mindestens einen NNI gekoppelt ist, um die Rahmenformate der zwischen den UNIs übertragenen Datenrahmen, und/oder die Rahmenformate der zwischen den NNIs übertragenen Datenrahmen, und/oder die Rahmenformate der zwischen der NNI und der UNI übertragenen Datenrahmen umzuwandeln;
wobei die Daten-Umwandlungs-Vorrichtung **dadurch gekennzeichnet ist, dass** sie eine virtuelle Schnittstellen-Vorrichtung (80) enthält,
wobei die virtuelle Schnittstellen-Vorrichtung folgendes umfasst: Mindestens zwei Vorrichtungs-Schnittstellen zur Eingabe oder Ausgabe von Datenrahmen; eine virtuelle Schnittstellen-Verarbeitungs-Einheit (800), die mit der Vorrichtungs-Schnittstelle gekoppelt ist, um die Datenrahmen zu verarbeiten und Datenrahmen zwischen der virtuellen Schnittstellen-Verarbeitungs-Einheit (800) und der Vorrichtungs-Schnittstelle auszutauschen; eine Regel-Datenbank (850), die mit der virtuelle Schnittstellen-Verarbeitungs-Einheit (800) gekoppelt ist und Regeln speichert, die verschiedenen Datenrahmen-Formaten entsprechen, um die virtuelle Schnittstellen-Verarbeitungs-Einheit (800) in die Lage zu versetzen, die Datenrahmen zu klassifizieren und Prozeduren für verschiedene Klassen der Datenrahmen gemäß Regeln zu bestimmen; eine Steuerungs-Schnittstellen-Einheit (900), die mit der Regel-Datenbank (850) und der virtuellen Schnittstellen-Verarbeitungs-Einheit (800) gekoppelt ist und sie steuert; und eine Schnittstelle zwischen den Vorrichtungen, die mit der virtuellen Schnittstellen-Verarbeitungs-Einheit (800) gekoppelt ist, um mit externen Vorrichtungen gekoppelt zu werden, um Datenrahmen auszutauschen.

2. System gemäß Anspruch 1, wobei die entsprechende Relation zwischen den Vorrichtungs-Schnittstellen und den Regeln 1:N ist, wobei N eine natürliche Zahl größer oder gleich 1 ist, und jede Vorrichtungs-Schnittstelle als Vorrichtungs-Schnittstelle konfiguriert ist, welche die Anforderung der Datenschnittstelle erfüllt, die einer beliebigen der Regeln entspricht.

3. System gemäß Anspruch 1 oder 2, wobei die Steuerungs-Schnittstellen-Einheit (900) eine Steuerungs-Schnittstelle bereitstellt, über die der Betrieb der virtuellen Schnittstellen-Verarbeitungs-Einheit (800) überwacht werden kann, und über die Operationen auf Regeln in den Regel-Datenbanken (850) hinzugefügt, gelöscht, geändert und gesucht werden können.

4. System gemäß Anspruch 3, wobei eine Regel eine Vorrichtungs-Schnittstellen-Nummer, eine Datenrahmen-Klassen-Nummer, einen Datenrahmen Adressen-Versatz, einen Datenrahmen-Eigenwert und eine Datenrahmen-Vergleichs-Maske enthält, die Verarbeitungs- und Steuerungs-Parameter bereitstellen, wenn die virtuelle Schnittstellen-Verarbeitungs-Einheit (800) die Datenrahmen verarbeitet.

5. System gemäß Anspruch 1, wobei
die Vorrichtungs-Schnittstelle mit der mindestens einen UNI oder der mindestens einen NNI verbunden ist,
die virtuelle Schnittstellen-Vorrichtung (80) über die Schnittstelle zwischen den Vorrichtungen (860) mit der Datenverarbeitungs- und Abfertigungs-Vorrichtung (90) verbunden ist, und
die entsprechende Relation zwischen den Vorrichtungs-Schnittstellen und der mindestens einen UNI oder der mindestens einen NNI 1:1 ist.

6. Verfahren für den Zugriff und die Übertragung von Datenrahmen über ein digitales Übertragungsnetz unter Verwendung des Systems aus Anspruch 1, wobei das System eine Daten-Umwandlungs-Vorrichtung enthält, die **dadurch gekennzeichnet ist, dass** sie eine virtuelle Schnittstellen-Vorrichtung (80) enthält, wobei das Verfahren folgende Schritte umfasst:
Suchen nach einer ersten Regel, die einer Vorrichtungs-Schnittstelle entspricht;
Feststellen, ob die erste Regel gefunden wurde, wenn die erste Regel nicht gefunden wurde, Beenden des Prozesses;
Wenn die erste Regel gefunden wurde, Erhalten einer Datenrahmen-Klassen-Nummer;
Feststellen, ob die Datenrahmen-Klassen-Nummer einer zweiten Regel entspricht;
Wenn die Datenrahmen-Klassen-Nummer nicht einer zweiten Regel entspricht, Suchen nach einer nächsten Regel, die der Vorrichtungs-Schnittstelle entspricht, und Rückkehr zur Feststellung, ob die erste Regel gefunden wurde;
Wenn die Datenrahmen-Klassen-Nummer einer zweiten Regel entspricht, Ändern der Datenrahmen, Senden der Datenrahmen über eine Schnittstelle zwischen den Vorrichtungen, und dann Beenden des Prozesses.

7. Verfahren gemäß Anspruch 6, wobei die virtuelle Schnittstellen-Vorrichtung (80) die Datenrahmen, die über die Schnittstelle zwischen den Vorrichtungen eintreffen, entsprechen der folgenden Schritte verarbeitet:
Entnahme einer Datenrahmen-Klassen-Nummer, entsprechend dieser Suchen nach einer Regel, die der Datenrahmen-Typ-Nummer in der Regel-Datenbank (850) entspricht;
wenn die Regel nicht gefunden wird, Verwerfen der Datenrahmen und Beenden des Prozesses;
wenn die Regel gefunden wird, Ändern der Datenrahmen und Senden der Datenrahmen entsprechend der Regel an eine der Vorrichtungs-Schnittstellen.

8. Verfahren gemäß Anspruch 6, wobei der Schritt des Suchens einer ersten Regel, die einer Vorrichtungs-Schnittstelle entspricht, folgendes umfasst: Durchführen einer Suche in einer Regel-Datenbank (850) mit dem Index einer Vorrichtungs-Schnittstellen-Nummer der Vorrichtungs-Schnittstelle, welche die Datenrahmen empfängt.

9. Verfahren gemäß Anspruch 6, wobei der Schritt des Beendens des Prozesses, wenn die erste Regel nicht gefunden wird, ferner einen Schritt der Ausgabe eines Berichtes und des Verwerfens der Datenrahmen umfasst.

10. Verfahren gemäß Anspruch 6, wobei der Schritt des Erhaltens einer Datenrahmen-Klassen-Nummer folgendes umfasst:
Lesen von Information am Adressen-Versatz der Datenrahmen gemäß dem Datenrahmen-Adressen-Versatz in der ersten Regel, und Durchführen einer bitweisen UND-Operation zwischen der gelesenen Information und der Datenrahmen-Vergleichs-Maske in der ersten Regel.

11. Verfahren gemäß Anspruch 10, wobei der Schritt des Bestimmens, ob die Datenrahmen-Klassen-Nummer der zweiten Regel entspricht, einen Schritt des Vergleichens der Datenrahmen-Klassen-Nummer mit einem Datenrahmen-Eigenwert in der ersten Regel umfasst.

12. Verfahren gemäß Anspruch 10, wobei der Schritt des Änderns der Datenrahmen einen Schritt des Einfügens der Daten-Klassen-Nummer in einen Kopf der Datenrahmen umfasst.

13. Verfahren gemäß Anspruch 7, wobei der Schritt des Entnehmens der Datenrahmen-Klassen-Nummer einen Schritt des Entnehmens der Datenrahmen-Klassen-Nummer aus einem Kopf der Datenrahmen umfasst.

14. Verfahren gemäß Anspruch 13, wobei der Schritt des Suchens nach einer Regel, die der Datenrahmen-Typ-Nummer entspricht, in der Regel-Datenbank (850) einen Schritt des Suchens in der Regel-Datenbank (850) mit einem Index der Datenrahmen-Klassen-Nummer umfasst.

15. Verfahren gemäß Anspruch 14, wobei die Schritte des Änderns der Datenrahmen und des Sendens der Datenrahmen an eine der Vorrichtungs-Schnittstellen entsprechend der Regel folgendes umfassen: Löschen der Daten-Klassen-Nummer im Kopf der Datenrahmen und Senden der Datenrahmen an eine der Vorrichtungs-Schnittstellen entsprechend der Vorrichtungs-Schnittstellen-Nummer in der Regel.

## Revendications

1. Système pour accéder à, et pour transporter des trames de données avec différents formats de trames, le système comprenant :
au moins une interface utilisateur/réseau - que l'on appellera par la suite une UNI - qui est couplée à un réseau utilisateur ; et/ou
au moins une interface réseau/réseau - que l'on appellera par la suite une NNI - qui est couplée à un réseau de transport numérique ; et
un dispositif de conversion de données, qui est couplé à ladite au moins une UNI et/ou à ladite au moins une NNI, pour convertir les formats de trame des trames de données transportées entre les UNI, et/ou les formats de trame des trames de données transportées entre les NNI, et/ou les formats de trame des trames de données transportées entre la NNI et la UNI ;
dans lequel ledit dispositif de conversion de données est **caractérisé en ce qu'**il comprend un dispositif d'interface virtuelle (80),
ledit dispositif d'interface virtuelle comprenant : au moins deux interfaces de dispositif pour entrer ou sortir des trames de données ; un module de traitement d'interface virtuelle (800) qui se couple aux dites interfaces de dispositif pour traiter lesdites trames de données et échanger des trames de données entre le module de traitement à interfaces virtuelles (800) et les interfaces de dispositif ; une base de données de règles (850) qui se couple au dit module de traitement à interfaces virtuelles (800) et qui contient des règles correspondant aux différents formats de trames de données, de façon à permettre au dit module de traitement d'interface virtuelle (800) de classifier les trames de données et de déterminer des procédures pour les différentes classes des trames de données en accord avec des règles ; un module d'interface de commande (900) qui se couple à, et qui commande ladite base de données de règles (850) et ledit module de traitement à interfaces virtuelles (800) ; et une interface inter dispositifs qui se couple au dit module de traitement à interfaces virtuelles (800) de façon à se coupler à des dispositifs externes pour échanger des trames de données.

2. Système selon la revendication 1, dans lequel la relation correspondante entre lesdites interfaces de dispositif et lesdites règles est de 1:N, dans laquelle N est un nombre naturel égal ou supérieur à 1, et chaque interface de dispositif est configurée comme une interface de dispositif satisfaisant les exigences de l'interface de données correspondant à l'une quelconque des règles.

3. Système selon la revendication 1 ou 2, dans lequel ledit module d'interface de commande (900) procure une interface de commande par le biais de laquelle il est possible de surveiller le fonctionnement du module de traitement à interfaces virtuelles (800), et de réaliser des opérations d'ajout, de suppression, de modification, et de recherche, sur des règles dans ladite base de données de règles (850).

4. Système selon la revendication 3, dans lequel une règle comprend un numéro d'interface de dispositif, un numéro de classe de trames de données, un décalage d'adresse de trames de données, une valeur propre d'une trame de données, et un masque de comparaison de trames de données, qui fournissent des paramètres de commande et de traitement lorsque ledit module de traitement à interfaces virtuelles (800) traite lesdites trames de données.

5. Système selon la revendication 1, dans lequel :
lesdites interfaces de dispositif se connectent à ladite au moins une UNI ou à ladite au moins une NNI,
le dispositif à interfaces virtuelles (80) se connecte au dit dispositif de traitement et de transfert de données (90) par le biais de ladite interface inter dispositifs (860), et
la relation correspondante entre lesdites interfaces de dispositif et ladite au moins une UNI ou ladite au moins une NNI est de 1:1.

6. Procédé pour accéder à, et pour transporter des trames de données sur un réseau de transport numérique, utilisant un système selon la revendication 1, ledit système comprenant un dispositif de conversion de données qui est **caractérisé en ce qu'**il comprend un dispositif à interfaces virtuelles (80), ledit procédé comprenant les étapes suivantes consistant à :
rechercher une première règle correspondant à une interface de dispositif ;
déterminer si ladite première règle est trouvée - ou non ; si ladite première règle n'est pas trouvée, mettre un terme à la procédure ;
si ladite première règle est trouvée, obtenir un numéro de classe de trames de données ;
déterminer si ledit numéro de classe de données satisfait une deuxième règle ;
si ledit numéro de classe de données ne satisfait pas une deuxième règle, rechercher une règle suivante correspondant à l'interface de dispositif, et revenir au début afin de déterminer si ladite première règle est trouvée ;
si ledit numéro de classe de données satisfait une deuxième règle, modifier lesdites trames de données, transférer les trames de données par le biais d'une interface inter dispositifs, et mettre alors un terme à la procédure.

7. Procédé selon la revendication 6, dans lequel ledit dispositif à interfaces virtuelles (80) traite les trames de données entrantes par le biais de l'interface inter dispositifs en accord avec les étapes suivantes consistant à :
extraire un numéro de classe de trame de données, à partir duquel une recherche est effectuée pour une règle correspondant au numéro de type de trame de données dans la base de données de règles (850);
si la règle n'est pas trouvée, supprimer lesdites trames de données, et mettre un terme à la procédure ;
si la règle est trouvée, modifier lesdites trames de données, et transférer les trames de données vers l'une des interfaces de dispositif en accord avec la règle.

8. Procédé selon la revendication 6, dans lequel l'étape de recherche d'une première règle correspondant à une interface de dispositif comprend l'étape consistant à : effectuer une recherche dans une base de données de règles (850) avec l'indice d'un numéro d'interface de dispositif de l'interface de dispositif qui reçoit les trames de données.

9. Procédé selon la revendication 6, dans lequel ladite étape selon laquelle si ladite première règle n'est pas trouvée, il convient de mettre un terme à la procédure, comprend par ailleurs une étape consistant à délivrer en sortie un rapport et à supprimer lesdites trames de données.

10. Procédé selon la revendication 6, dans lequel l'étape d'obtention d'un numéro de classe de trame de données comprend les étapes consistant à : lire des informations au niveau d'un décalage d'adresse pour les trames de données en accord avec le décalage d'adresse de trames de données dans la première règle, et exécuter une opération ET en bits entre lesdites informations lues et le masque de comparaison de trames de données dans la première règle.

11. Procédé selon la revendication 10, dans lequel l'étape de détermination du fait que le numéro de classe de trame de données satisfait - ou non - la deuxième règle, comprend une étape consistant à comparer le numéro de classe de trame de données à une valeur propre de trame de données dans la première règle.

12. Procédé selon la revendication 10, dans lequel l'étape de modification de trames de données comprend une étape consistant à insérer le numéro de classe de données dans un en-tête des trames de données.

13. Procédé selon la revendication 7, dans lequel l'étape d'extraction du numéro de classe de trames de données comprend une étape consistant à extraire le numéro de classe de données dans un en-tête des trames de données.

14. Procédé selon la revendication 13, dans lequel l'étape de recherche d'une règle correspondant au numéro de type de trames de données dans la base de données de règles (850) comprend une étape consistant à effectuer une recherche dans la base de données de règles (850) avec l'indice du numéro de classe de trames de données.

15. Procédé selon la revendication 14, dans lequel les étapes de modification desdites trames de données, et de transfert des trames de données vers l'une des interfaces de dispositif en accord avec la règle comprennent les étapes consistant à : supprimer le numéro de classe de trames de données au niveau de l'en-tête des trames de données, et transférer les trames de données vers l'une des interfaces de dispositif en accord avec le numéro d'interface de dispositif dans la règle.
